# EUROPÄISCHE PATENTANMELDUNG

(11) **EP 3 093 814 A1**
(43) Veröffentlichungstag der Anmeldung: **16.11.2016**
(21) Anmeldenummer: 15167676.4
(22) Anmeldetag: 13.05.2015
(51) Int. Cl.: G06Q 30/02

(54) **SYSTEM, VERFAHREN, ENDGERÄT UND COMPUTERPROGRAMMPRODUKT ZUR VERKNÜPFUNG EINES NUTZERS EINES MOBILEN ENDGERÄTS MIT MINDESTENS EINEM DATENSATZ**

(71) Anmelder: Schwarz Dienstleistung KG, 74172 Neckarsulm (DE)
(72) Erfinder: Blömer, Markus, 74172 Neckarsulm (DE); Dierkes, Maximilian, 74172 Neckarsulm (DE); Köhler, Carsten, 74172 Neckarsulm (DE)
(74) Vertreter: Eisenführ Speiser

(57) **Zusammenfassung**

Die vorliegende Erfindung betrifft das Verknüpfen eines Nutzers eines mobilen Endgeräts (12, 22, 32) mit mindestens einem Datensatz insbesondere in einem Verkaufsmarkt. Ein mobiles Endgerät (12, 22, 32) weist einen Empfänger (13, 23, 33) zum Erfassen eines Ortungssignals auf. Eine Kasse (14, 24, 34) erfasst Einkaufsartikel mit einem Eingabemittel (15, 25, 35). Ein Mittel (16, 26, 36) schließt das Erfassen ab. Durch Vorliegen einer räumlichen und zeitlichen Koinzidenz lässt sich ermitteln, dass sich das mobile Endgerät (12, 22, 32) zum Zeitpunkt des Abschließens der Erfassung innerhalb eines vorbestimmten räumlichen Abstands zur Kasse (14, 24, 34) befand.

## Beschreibung

Die vorliegende Erfindung betrifft ein System, ein Verfahren, ein Endgerät und ein Computerprogrammprodukt zur Verknüpfung eines Nutzers oder einer Nutzerkennung eines mobilen Endgeräts mit mindestens einem Datensatz.

Herkömmliche Systeme und Verfahren dieser Art zielen darauf ab, persönliche Daten eines Kunden, wie etwa Name, Adresse, Geburtsdatum, Einkaufsvorlieben, etc. mit einem neuen Datensatz, wie etwa einen aktuell getätigten oder zu tätigenden Einkauf, zu verknüpfen. Damit sollen beispielsweise die Kundenbindung erhöht, Kaufempfehlungen bereitgestellt und/oder Preisaktionen weitergegeben werden.

Dazu ist es bekannt, den Kunden zur Teilnahme an einem Bonussystem einzuladen, bei dem der Kunde nach einmaliger Anmeldung und Bereitstellung persönlicher Daten wie etwa Adresse oder Geburtsdatum eine Kundennummer erhält, die der Kunde dann bei jedem Einkauf beispielsweise dem Verkäufer an der Kasse nennt. Auf diese Weise kann der Verkäufer die Kundennummer mit Details des aktuellen Einkaufs wie etwa der Produktliste und/oder dem Einkaufspreis verknüpfen. Ein Nachteil dieser herkömmlichen Systeme und Verfahren besteht darin, dass der Kunde bei jedem Kassiervorgang seine Kundennummer mitteilen muss, die in der Folge vom Kassierer erfasst wird. Dadurch wird einerseits der Abschluss des Bezahlvorgangs verzögert, andererseits liegen datenschutzrechtliche Bedenken auf der Hand. Denn ein Mitteilen der eigenen Kundennummer kann durch andere Kunden gehört werden. Davon abgesehen vergisst der Kunde möglicherweise die eigene Kundennummer, weil er ihr nicht die Bedeutung beispielsweise des PIN-Codes der eigenen Girokarte beimisst. Einige Anbieter adressieren diesen Nachteil durch die Ausgabe von Bonuskarten, auf denen persönliche Daten des Kunden bzw. dessen Kundennummer gespeichert sind. Beim Bezahlvorgang muss dann lediglich die Bonuskarte erfasst werden, was beispielsweise durch RFID-Technologie oder Magnetstreifen erreicht werden kann. Gleichwohl muss der Kunde bei diesen Lösungen immer seine Bonuskarte mit sich führen.

Es ist ferner bekannt, den Kunden mittels Details des gewählten Bezahlvorgangs zu identifizieren und so mit dem den aktuellen Einkauf repräsentierenden Datensatz zu verknüpfen. So kann eine Kundennummer beispielsweise auf der Basis einer Kreditkartennummer des Kunden festgelegt werden. Ebenso ist es möglich, Daten eines vom Kunden genutzten Online-Bezahlsystems in eine Kundennummer umzuwandeln. Ein Nachteil dieser herkömmlichen Systeme und Verfahren besteht darin, dass ein Verknüpfen des aktuellen Einkaufs mit dem Kunden bzw. mit den Kunden repräsentierende persönliche Daten auf die konkret gewählte Bezahlart (beispielsweise die konkrete Kreditkarte, der konkrete Anbieter eines Online-Bezahlsystems) beschränkt ist. Entscheidet sich der Kunde insbesondere zur Barzahlung, ist keine Verknüpfung des aktuellen Einkaufs mit den Kundendaten möglich.

Aufgabe der vorliegenden Erfindung ist daher, ein verbessertes System, ein verbessertes Verfahren, ein verbessertes Endgerät und ein verbessertes Computerprogrammprodukt zur Verknüpfung eines Nutzers eines mobilen Endgeräts mit mindestens einem Datensatz bereitzustellen, die einerseits das Mitführen einer Bonuskarte überflüssig macht, und die andererseits unabhängig von der gewählten Bezahlart ist. Diese Aufgabe wird durch die vorliegende Erfindung gelöst.

Ein erster Aspekt der Erfindung betrifft ein System zur Verknüpfung eines Nutzers eines mobilen Endgeräts mit mindestens einem Datensatz, umfassend: das mobile Endgerät, wobei dass mobile Endgerät ein Mittel zum Erfassen eines Lokalisationssignals aufweist; ein zweites Endgerät, wobei das zweite Endgerät ein Mittel zum Erfassen des Datensatzes aufweist; ein Mittel zum Abschließen des Erfassens; und ein Mittel zum Ermitteln, auf der Grundlage des Lokalisationssignals, dass sich das mobile Endgerät zum Zeitpunkt des Abschließens der Erfassung innerhalb eines vorbestimmten räumlichen Abstands zum zweiten Endgerät befand.

Die vorliegende Erfindung erreicht ein Verknüpfen, also etwa ein Zuordnen, eines Nutzers bzw. einer Nutzerkennung mit einem Datensatz, also etwa aktuellen Einkaufsdaten, einer Bestellung, Buchungsdetails, etc.

Bei einem Lokalisationssignal handelt es sich beispielsweise um ein Ortungssignal, dass durch einen oder mehrere Sender bereitgestellt wird, die in einem Geschäft angeordnet sind. Typischerweise enthält das Ortungssignal Informationen über die Position des Senders.

Das Mittel zum Erfassen eines Lokalisationssignals umfasst beispielsweise eines oder mehrere Empfangsmittel, die in dem mobilen Endgerät angeordnet sind. Das mobile Endgerät ist beispielsweise ausgestaltet, das Ortungssignal zu empfangen und zu verarbeiten. Durch Erfassen eines Ortungssignals, das wiederum einem bestimmten Sender zugeordnet sein kann, lässt sich die Position des mobilen Endgeräts beispielsweise an einem Point-of-Sale (PoS) oder in einem Geschäft ermitteln. Dies lässt sich beispielsweise erreichen durch Auswerten der Signalstärke des Ortungssignals, wobei eine hohe Signalstärke darauf hinweist, dass sich das mobile Endgerät dicht am Sender befindet. Entsprechend kann eine geringe Signalstärke des Ortungssignals darauf hinweisen, dass das mobile Endegerät weit von dem Sender entfernt ist. Die Positionsermittlung kann auch binär erfolgen, wenn das Ortungssignal etwa ab einer bestimmten Entfernung zum Sender nicht mehr ausreichend nachweisbar ist. Dann bedeutet ein Erfassen des Lokalisationssignals, dass sich das mobile Endgerät innerhalb eines gewissen Radius zum Sender befindet. Durch Einsatz mehrere Sender lässt sich die Position des mobilen Endgeräts dann noch genauer bestimmen.

An einem PoS handelt es sich bei dem zweiten Endgerät typischerweise um eine Kasseneinheit. Die Kasseneinheit kann etwa in der Nähe des Ausgangs angeordnet sein. Dadurch lässt sich beispielsweise ermitteln, dass ein Nutzer, also beispielsweise ein Kunde des Geschäfts, demnächst einen Bezahlvorgang einleiten wird, wenn sich der Nutzer in Richtung Ausgang bewegt. Durch Anordnen von einer oder mehreren Kasseneinheiten in der Nähe des Ausgangs lassen sich entsprechend Sender von Lokalisationssignalen in anderen Bereichen des Geschäfts einsparen. Sind die eine oder mehrere Kasseneinheiten im Geschäft verteilt, also nicht in einem bestimmten Bereich (etwa in der Nähe des Ausgangs) gebündelt, ist ein Einsparen von Sendern von Lokalisationssignalen nur bedingt möglich. Durch Anpassen der Signalstärken kann aber auch diese Situation berücksichtigt werden. So kann etwa die Reichweite eines Senders, der in der Kasseneinheit angeordnet ist, derart niedrig eingestellt werden, dass das mobile Endgerät das Lokalisationssignal nur dann empfängt, wenn sich der Kunde in unmittelbarer Nähe (beispielsweise in einem Abstand von weniger als einem Meter) zur Kasseneinheit befindet. Noch genauer lässt sich die Positon ermitteln, wenn das mobile Endgerät im Rahmen eines Bezahlvorgangs oder als Mittel für Kundenbindungsaktionen (beispielsweie Bonuskarten, Rabattaktionen oder Gewinnspielen) vor ein Terminal der Kasseneinheit gehalten wird.

In einem Geschäft handelt es sich bei dem Mittel zum Erfassen des Datensatzes beispielsweise durch eine Eingabe-Schnittstelle der Kasseneinheit, wie etwa eine Tastatur oder ein Barcode-Scanner. Mit Tastatur oder Barcode-Scanner lassen sich die vom Kunden ausgewählten Produkte erfassen und einer Kostenrechnung hinzufügen. Die Eingabeschnittstelle kann auch Komponenten umfassen, mit denen Verfahren wie Wiegen, Messen oder Schätzen durchgeführt werden oder Produkte mittels Funktechnologie erkannt werden. Darüber hinaus kann die Eingabeschnittstelle auch Eingaben des Kunden im Rahmen des Einkaufs umfassen (durch den Kunden durchgeführtes Scannen per Software auf dem mobiles Endgerät oder an einer Selbstbedienungskasse).

Durch Bereitstellen eines Mittels zum Abschließen des Erfassens wird sichergestellt, dass ein eindeutiger zeitlicher Bezug des Verknüpfens des Kunden, bzw. der Kundenkennung, mit dem Datensatz (etwa einer Einkaufsrechnung) erfolgt. Das Mittel zum Abschließen des Erfassens kann beispielsweise eine dedizierte Eingabe-Schnittstelle (etwa eine speziell hierfür gewidmete Taste) umfassen. Ebenso ist es möglich, das Abschließen des Erfassens mit dem Einleiten eines Bezahlvorgangs zu koppeln. So ist es beispielsweise bei herkömmlichen Kassensystemen üblich, dass ein Kassierer bei Barzahlung durch den Kunden den erhaltenen Betrag über eine Tastatur in die Kasse eingibt, woraufhin dann auf einem Display der Rückbetrag angezeigt wird, und sich eine Schublade mit Wechselgeld öffnet. Die Eingabe des erhaltenen Betrags lässt sich dann als Abschließen des Erfassens deuten, wodurch eine dedizierte Taste nicht erforderlich ist. Dann ist allerdings beispielsweise eine zusätzliche Softwarelösung erforderlich, die die Zuordnung "Geldbetrag erhalten" - "Erfassen abgeschlossen" vornimmt.

Bei dem Mittel zum Ermitteln handelt es sich beispielsweise um ein Computerprogramm, dass aus dem Lokalisationssignal bzw. aus darauf basierenden Signalen, aus dem erfassten Abschluss des Erfassens, aus dem erfassten Datensatz eine Verknüpfung von Kunden und erfasstem Datensatz vornimmt. Dazu wird zunächst ermittelt, in welchem Abstand sich das mobile Endgerät zum zweiten Endgerät befindet. Ist der ermittelte Abstand kleiner als ein vorbestimmter räumlicher Abstand (etwa einem Meter), lässt sich daraus schließen, dass sich das mobile Endgerät in unmittelbarer Nähe zum zweiten Endgerät befindet. In einem PoS lässt sich so beispielsweise ermitteln, dass sich ein Kunde zum Zeitpunkt des Abschließens des Erfassens in unmittelbarer Nähe zur Kasseneinheit befindet.

Es ist denkbar, dem Mittel zum Ermitteln weitere Daten des mobilen Endgeräts zu übermitteln, um eine direkte Identifikation des Kunden zu ermöglichen. Andererseits ist es möglich, dass beim Beschränken auf das Übermitteln von Ortungssignalen (also insbesondere ohne weitere Metadaten) eine Verknüpfung mehrerer Kunden mit demselben Datensatz möglich ist. So könnten beispielsweise zwei Kunden eines Geschäfts in einem derart dichten Abstand zueinander (beispielsweise weniger als ein halber Meter) an der Kasse warten, dass eine genaue räumliche Auflösung bzw. Zuordnung des "aktiven" Kunden nicht möglich ist. Zwar ist denkbar, denjenigen Kunden der "zuerst" an der Kasse angekommen ist, als "aktiven" Kunden zu identifizieren. Auf diese Weise wird aber insbesondere nicht die Situation erfasst, dass der spätere Kunde bereits bezahlt, während der frühere Kunde seinen Einkauf noch nicht vollständig verpackt hat. Um solche Verknüpfungskonflikte aufzulösen ist es daher denkbar, in einem Zwischenschritt zunächst beide Verknüpfungsmöglichkeiten zwischen zu speichern und später einen von beiden manuell auszuwählen. Eine solche Lösung bietet sich insbesondere dann an, wenn das Mittel zum Ermitteln auf dem zweiten Endgerät oder auf einem Server angeordnet ist. Ist das Mittel zum Ermitteln auf dem mobilen Endgerät angeordnet, können datenschutzrechtliche Bedenken bestehen, eine (möglicherweise falsche) Verknüpfungsmöglichkeit auf dem mobilen Endgerät zu speichern (da ein erster Nutzer somit möglicherweise Zugriff auf den Datensatz eines zweiten Nutzers hätte). In einem solchen Fall kann aber festgelegt werden, den Datensatz bei Vorliegen eines Verknüpfungskonfliktes zu verwerfen und für die Kunden in unmittelbarer Nähe der Kasseneinheit keine Verknüpfung vorzunehmen. Soweit der Kunde beim Bezahlvorgang das mobile Endgerät an ein Terminal der Kasseneinheit hält, erfolgt die Zuordnung sehr präzise und konfliktfrei.

In einer Ausführungsform überträgt das mobile Endgerät einen Zeitstempel des mobilen Endgeräts an das Mittel zum Ermitteln. In einer Ausführungsform überträgt das mobile Endgerät einen Zeitstempel des Lokalisationssignals an das Mittel zum Ermitteln. In einer Ausführungsform überträgt das zweite Endgerät einen Zeitstempel des zweiten Endgeräts an das Mittel zum Ermitteln. In einer Ausführungsform überträgt das zweite Endgerät einen Zeitstempel des Lokalisationssignals an das Mittel zum Ermitteln. Das Übermitteln eines Zeitstempels ermöglicht insbesondere eine Zuordnung des Lokalisationssignals zum Datensatz.

In einer Ausführungsform umfasst das Mittel zum Ermitteln einen oder mehrere Server. Server können im Wesentlichen jederzeit mit hoher Verfügbarkeit und hoher Leistungsfähigkeit durch das mobile Endgerät und das zweite Endgerät erreicht werden, beispielsweise mittels Internet. Die Verarbeitung von Anfragen durch leistungsstarke Server kann dabei nahezu in Echtzeit erfolgen. Ferner liegen sämtliche Daten des Kunden zentral vor und eignen sich somit besonders gut zur Auswertung.

In einer Ausführungsform umfasst das mobile Endgerät das Mittel zum Ermitteln. Durch Bereitstellen des Mittels zum Ermitteln auf dem mobilen Endgerät bleibt dem Nutzer die Hoheit über seine eigenen Daten. Es wird somit auch kein Internet-Zugriff zu einem Server benötigt. Daten über den aktuellen Einkauf können etwa direkt von dem zweiten Endgerät an das erste Endgerät übermittelt werden.

In einer Ausführungsform umfasst das zweite Endgerät das Mittel zum Ermitteln. Durch Anordnen des Mittels zum Ermitteln auf dem zweiten Endgerät wird kein permanenter Online-Zugriff des zweiten Endgerätes auf einen zentralen Server benötigt. Das zweite Endgerät (beispielsweise eine Kasse) ist in einer Ausführungsform ausgestaltet, die erfassten Daten für weitere Auswertungen auf Anforderung oder in regelmäßigen Abständen an einen Server zu übertragen. Auf diese Weise wird auch eine erhöhte Sicherheit des erfindungsgemäßen Systems erreicht, da das zweite Endgerät nicht ständig online verfügbar (und damit möglichen Phishing- oder anderen Hacker-Angriffen ausgesetzt) ist.

In einer Ausführungsform ist das zweite Endgerät ist in einem Geschäft und/oder einem Ausstellungsraum und/oder im Freien angeordnet. Durch Anordnen des zweiten Endgerätes (etwa einer Kasse) in einem Geschäft kann beim KassierVorgang über eine zeitliche Koinzidenz der Feststellung eines Zahlungsmittels in der Kasse und der Anwesenheit eines Kunden an der Kasse eine Verbindung von Transaktionsdaten mit Kundendaten erfolgen. Durch Anordnen des zweiten Endgerätes (etwa eines Verkaufs-PCs zur Aufnahme einer Bestellung) in einem Ausstellungsraum kann über eine zeitliche Koinzidenz der Auslösung der Bestellung mit der Anwesenheit des Kunden eine Verbindung der Bestellung mit Kundendaten erfolgen. Hierbei ist es insbesondere nicht erforderlich, dass der Kunde dem Mitarbeiter seine Kundendaten mitteilt. Durch Anordnen des zweiten Endgerätes im Freien (etwa in einem Biergarten) kann beim Kassier-Vorgang über eine zeitliche Koinzidenz der Feststellung eines Zahlungsmittels in der Kasse und der Anwesenheit eines Kunden an der Kasse eine Verbindung von Transaktionsdaten mit Kundendaten erfolgen.

In einer Ausführungsform ist das Lokalisationssignal permanent aktiv oder wird in regelmäßigen Abständen gesendet. Durch Bereitstellen eines permanent aktiven Lokalisationssignals wird typischerweise eine besonders hohe Ortungsgenauigkeit erreicht. Ein entsprechendes Signal kann durch Wahl der passenden Funktechnologie des Lokalisationssignals unterstützt werden. Durch Bereitstellen eines Lokalisationssignals, das in regelmäßigen Abständen gesendet wird, kann die Taktung von gesendeten Lokalisationssignalen räumlich je nach Anforderung differenziert eingestellt werden. In einem Geschäft kann so in manchen Bereichen des Marktes (etwa weit entfernt von der Kasse) eine niedrige Taktung des Lokalisationssignals gewählt werden und in anderen Bereichen des Marktes (etwa in unmittelbarer Nähe der Kasse) eine hohe Taktung. Hierdurch wird die Menge der an das Mittel zum Ermitteln zu übertragenden Daten auf das Notwendige reduziert. Ein entsprechendes Signal kann durch Wahl der passenden Funktechnologie des Lokalisationssignals unterstützt werden.

In einer Ausführungsform wird das Lokalisationssignal mittels einer Funktechnologie durch das mobile Endgerät empfangen, wobei die Funktechnologie GPS (Global Positioning System) und/oder WLAN (Wireless Local Area Network) und/oder Bluetooth Low Energy (Bluetooth LE, Bluetooth Smart) und/oder Beacon-Technologie und/oder NFC (Near Field Communication) und/oder Galileo (europäisches globales Satellitennavigations- und Zeitgebungssystem unter ziviler Kontrolle) umfasst. Durch die genannten Technologien werden im Wesentlichen alle relevanten Ortungsmöglichkeiten unterstützt. Auf diese Weise wird eine Ortung des mobilen Endgeräts mit den genannten Technologien ermöglicht.

In einer Ausführungsform wird das Lokalisationssignal mittels einer Funktechnologie durch das zweite Endgerät empfangen, wobei die Funktechnologie GPS und/oder WLAN und/oder Bluetooth Low Energy und/oder Beacon-Technologie und/oder NFC und/oder Galileo umfasst. Durch die genannten Technologien werden im Wesentlichen alle relevanten Ortungsmöglichkeiten unterstützt. Auf diese Weise wird eine Ortung des zweiten Endgeräts mit den genannten Technologien ermöglicht. Die Position des zweiten Endgeräts ist dann auch bekannt, wenn es zuvor bewegt wurde.

In einer Ausführungsform umfasst das Mittel zum Erfassen des Lokalisationssignals eine Anwendung auf dem mobilen Endgerät, wobei die Anwendung ausgestaltet ist zum Erzeugen eines Lokalisations-Erfassungssignals auf der Grundlage des Lokalisationssignals. Durch das Erzeugen eines Lokalisations-Erfassungssignals auf der Grundlage des Lokalisationssignals können dem Lokalisationssignal weitere Metadaten hinzugefügt werden.

In einer Ausführungsform ist die Anwendung ausgestaltet, beim Erzeugen des Lokalisations-Erfassungssignals einen aktuellen Zeitstempel des mobilen Endgeräts zu verarbeiten. In einer Ausführungsform ist die Anwendung ausgestaltet, beim Erzeugen des Lokalisations-Erfassungssignals einen aktuellen Zeitstempel des zweiten Endgeräts zu verarbeiten. In einer Ausführungsform ist die Anwendung ausgestaltet, beim Erzeugen des Lokalisations-Erfassungssignals einen aktuellen Zeitstempel des Lokalisationssignals zu verarbeiten. In einer Ausführungsform ist das Mittel zum Ermitteln ausgestaltet, einen aktuellen Zeitstempel des Mittels zum Ermitteln bei einem Empfangen eines Lokalisations-Erfassungssignals zu ergänzen, insbesondere nur dann, wenn das Lokalisations-Erfassungssignal keinen Zeitstempel enthält. Das Übermitteln eines Zeitstempels ermöglicht insbesondere eine Zuordnung des Lokalisationssignals zum Datensatz.

In einer Ausführungsform ist die Anwendung ausgestaltet, dem Mittel zum Ermitteln das Lokalisations-Erfassungssignal bereitzustellen. Das Bereitstellen des Lokalisations-Erfassungssignals an das Mittel zum Ermitteln ermöglicht ein Verknüpfen des Datensatzes mit weiteren Metadaten des Nutzers.

In einer Ausführungsform umfasst das zweite Endgerät ein zweites mobiles Endgerät, wobei dem Mittel zum Ermitteln eine Position des zweiten mobilen Endgeräts bekannt ist. Durch die Wahl eines mobilen Endgeräts als zweites Endgerät wird ein flexibles Abwickeln des Bezahlvorgangs sowie ein flexibles Verknüpfen des Datensatzes mit dem Kunden ermöglicht.

In einer Ausführungsform umfasst das zweite Endgerät ein stationäres Endgerät, wobei dem Mittel zum Ermitteln eine Position des stationären Endgeräts bekannt ist. Durch Bereitstellen eines stationären Endgeräts als zweites Endgerät kann eine vorhandene Infrastruktur weiterverwendet werden. Ist das zweite Endgerät eine Kasse, wird die Position der Kasse in einem Initalisierungsvorgang dem Mittel zum Ermitteln mitgeteilt. In der Folge muss das Mittel zum Ermitteln kein Lokalisationssignal des zweiten Endgeräts verarbeiten und interpretieren.

In einer Ausführungsform umfasst das Mittel zum Abschließen des Erfassens eine Komponente zum Erkennen eines Ereignisses, wobei das Ereignis mindestens eines aus der Gruppe "Zahlungsverfahren gewählt", "Bestellung komplett", "Check-In abgeschlossen" umfasst. Handelt es sich bei dem Ereignis um die Auswahl eines Zahlungsverfahrens, kann das erfindungsgemäße System insbesondere an einem PoS verwendet werden. Handelt es sich bei dem Ereignis um den Abschluss einer Bestellung, kann das erfindungsgemäße System insbesondere in Ausstellungsräumen verwendet werden. Handelt es sich bei dem Ereignis um den Abschluss eines Check-Ins, kann das erfindungsgemäße System insbesondere in Hotels verwendet werden.

In einer Ausführungsform umfasst das Mittel zum Abschließen des Erfassens eine Schnittstelle zur Bestätigung der vollständigen Erfassung des Datensatzes. In einer Ausführungsform enthält das mobile Endgerät das Mittel zum Abschließen des Erfassens. In einer Ausführungsform enthält das zweite Endgerät das Mittel zum Abschließen des Erfassens. Durch Bereitstellen eines Mittels zum Abschließen des Erfassens lässt sich ein Zeitpunkt klar definieren, an dem über das Vorliegen einer räumlichen Koinzidenz (etwa: Nutzer ist nahe des zweiten Endgeräts oder nicht) entschieden wird. Insbesondere ist vorgesehen, dass der Nutzer des mobilen Endgerätes oder der Nutzer des zweiten Endgerätes festlegt, wann das Erfassen abgeschlossen ist.

Ein weiterer Aspekt der Erfindung betrifft ein Verfahren zur Verknüpfung eines Nutzers eines mobilen Endgeräts mit mindestens einem Datensatz, umfassend die folgenden Schritte: Erfassen eines Lokalisationssignals durch das mobile Endgerät; Erfassen des Datensatzes durch ein zweites Endgerät; Abschließen des Erfassens; Ermitteln, auf der Grundlage des Lokalisationssignals, dass sich das mobile Endgerät zum Zeitpunkt des Abschließens der Erfassung innerhalb eines vorbestimmten räumlichen Abstands zum zweiten Endgerät befand.

In einer Ausführungsform erfolgt das Ermitteln ferner auf der Grundlage eines Zeitstempels des mobilen Endgeräts und/oder eines Zeitstempels des Lokalisationssignals und/oder eines Zeitstempels des zweiten Endgeräts.

In einer Ausführungsform umfasst das Verfahren ferner: Anordnen des zweiten Endgeräts in einem Geschäft und/oder einem Ausstellungsraum und/oder im Freien.

In einer Ausführungsform ist das Lokalisationssignal permanent aktiv ist oder wird in regelmäßigen Abständen gesendet.

In einer Ausführungsform wird das Lokalisationssignal mittels einer Funktechno- logie durch das mobile Endgerät empfangen, wobei die Funktechnologie GPS und/oder WLAN und/oder Bluetooth Low Energy und/oder Beacon-Technologie und/oder NFC und/oder Galileo umfasst.

In einer Ausführungsform wird das Lokalisationssignal mittels einer Funktechnologie durch das zweite Endgerät empfangen, wobei die Funktechnologie GPS und/oder WLAN und/oder Bluetooth Low Energy und/oder Beacon-Technologie und/oder NFC und/oder Galileo umfasst.

In einer Ausführungsform umfasst das Verfahren ferner: Erzeugen eines Lokalisations-Erfassungssignals auf der Grundlage des Lokalisationssignals.

In einer Ausführungsform umfasst das Erzeugen des LokalisationsErfassungssignals ferner das Verarbeiten eines aktuellen Zeitstempel des mobilen Endgeräts und/oder eines aktuellen Zeitstempel des zweiten Endgeräts und/oder einen aktuellen Zeitstempel des Lokalisationssignals.

In einer Ausführungsform umfasst das Verfahren ferner: Ergänzen eines aktuellen Zeitstempels bei einem Empfangen eines Lokalisations-Erfassungssignals, insbesondere nur dann, wenn das Lokalisations-Erfassungssignal keinen Zeitstempel enthält.

In einer Ausführungsform umfasst das Abschließen des Erfassens ein Erkennen eines Ereignisses, wobei das Ereignis beispielsweise eines aus der Gruppe "Zahlungsverfahren gewählt", "Bestellung komplett", "Check-In abgeschlossen" umfasst.

In einer Ausführungsform umfasst das Abschließen des Erfassens ein Bestätigen der vollständigen Erfassung des Datensatzes.

Ein weiterer Aspekt der Erfindung betrifft ein mobiles Endgerät zur Verknüpfung eines Nutzers des mobilen Endgeräts mit mindestens einem Datensatz, umfassend: ein Mittel zum Erfassen eines Lokalisationssignals; ein Mittel zum Empfangen eines Datensatzes von einem zweiten Endgerät; ein Mittel zum Empfangen einer Position des zweiten Endgeräts; ein Mittel zum Senden eines Erfassungsabschluss-Signals an das zweite Endgerät; und ein Mittel zum Ermitteln, auf der Grundlage des Lokalisationssignals, dass sich das mobile Endgerät zum Zeitpunkt des Abschließens der Erfassung innerhalb eines vorbestimmten räumlichen Abstands zum zweiten Endgerät befand.

Ein weiterer Aspekt der Erfindung betrifft ein Endgerät zur Verknüpfung eines Nutzers eines ersten mobilen Endgeräts mit mindestens einem Datensatz, umfassend: ein Mittel zum Erfassen eines Datensatzes; ein Mittel zum Abschließen des Erfassens; ein Mittel zum Empfangen eines Lokalisationssignals von dem ersten mobilen Endgerät; und ein Mittel zum Ermitteln, auf der Grundlage des Lokalisationssignals, dass sich das erste mobile Endgerät zum Zeitpunkt des Abschließens der Erfassung innerhalb eines vorbestimmten räumlichen Abstands zum Endgerät befand.

Ein weiterer Aspekt der Erfindung betrifft ein Computerprogrammprodukt, welches eingerichtet ist, ein erfindungsgemäßes System zur Durchführung des erfindungsgemäßen Verfahrens zu veranlassen.

Das System zur Verknüpfung eines Nutzers eines mobilen Endgeräts mit mindestens einem Datensatz nach Anspruch 1, das Verfahren zur Verknüpfung eines Nutzers eines mobilen Endgeräts mit mindestens einem Datensatz nach Anspruch 12, das mobile Endgerät zur Verknüpfung eines Nutzers des mobilen Endgeräts mit mindestens einem Datensatz nach Anspruch 13, das Endgerät zur Verknüpfung eines Nutzers eines ersten mobilen Endgeräts mit mindestens einem Datensatz nach Anspruch 14 und das Computerprogrammprodukt nach Anspruch 15 haben ähnliche und/oder identische bevorzugte Ausführungsformen.

Eine bevorzugte Ausführungsform der Erfindung kann ebenso eine Kombination der abhängigen Ansprüche oder oben genannten Ausführungsformen mit dem entsprechenden unabhängigen Anspruch sein.

Im Folgenden wird eine Ausführungsform der vorliegenden Erfindung anhand der Figuren beschrieben. In den Figuren sind gleiche bzw. funktionsgleiche Teile mit denselben Bezugszeichen bezeichnet. Es zeigt:
- Fig. 1:: eine schematische und exemplarische Darstellung einer ersten Ausführungsform;
- Fig. 2:: eine schematische und exemplarische Darstellung einer zweiten Ausführungsform; und
- Fig. 3:: eine schematische und exemplarische Darstellung einer dritten Ausführungsform.

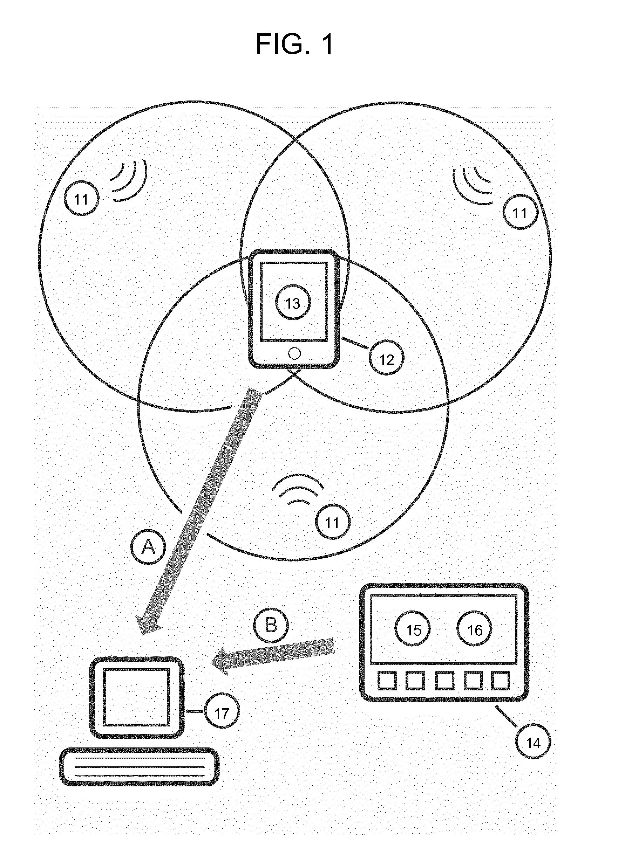

Fig. 1 zeigt eine schematische und exemplarische Darstellung einer ersten Ausführungsform mit einer Artikelerfassung an einer Kasse.

Ein mobiles Endgerät 12 empfängt durch Mittel 13 zum Erfassen eines Lokalisationssignals Lokalisationssignale 11. Wie durch Pfeil A illustriert, werden die erfassten Lokalisationssignale fortwährend an einen Server 17 übertragen.

Ein zweites Endgerät 14, in diesem Falle eine Kasse, erfasst die Artikelliste eines Einkaufs durch einen Barcode-Scanner 15. Nach vollständiger Erfassung der Artikelliste wird durch Betätigen einer Taste 16 an der Kasse 14 der Erfassungsvorgang abgeschlossen. Wie im Pfeil B illustriert, wird in diesem Moment die Artikelliste und der Standort der Kasse an den Server 17 übertragen. Optional ist der Standort der Kasse dem Server 17 bereits bekannt.

Die Daten aus dem mobilen Endgerät 12 und der Kasse 14 werden im Server 17 zusammengeführt. Ausgehend vom Zeitpunkt des Abschlusses der Erfassung der Artikelliste prüft der Server 17, ob sich ein mobiles Endgerät 12 zu diesem Zeitpunkt innerhalb eines vorgegebenen Abstands zur Kasse 14 befand. Dies erfolgt durch Vergleich der Positionsdaten aller im Geschäft erfassten mobilen Endgeräte 12 und der Kasse 14. Durch die räumliche (mobiles Endgerät 12 befindet sich in der Nähe der Kasse 14) und zeitliche (mobiles Endgerät 12 befindet sich in der Nähe der Kasse 14 zum Zeitpunkt des Abschlusses der Erfassung der Artikelliste) Koinzidenz kann die Artikelliste dem Kunden zugeordnet werden.

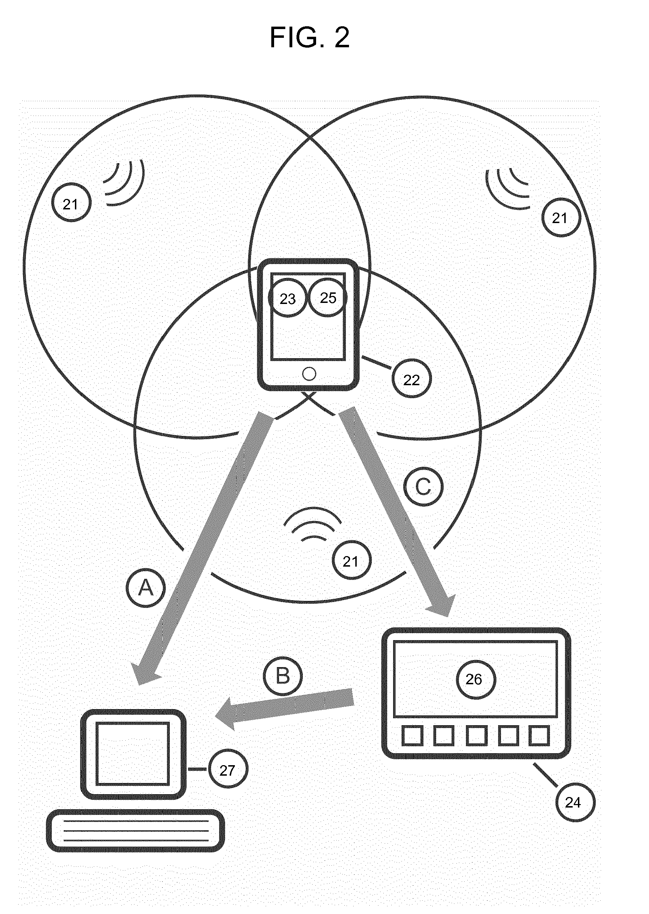

Fig. 2 zeigt eine schematische und exemplarische Darstellung einer zweiten Ausführungsform mit einer Artikelerfassung durch einen Kunden mit seinem Smartphone.

Ein mobiles Endgerät 22 (beispielsweise ein Smartphone) empfängt durch Mittel 23 zum Erfassen eines Lokalisationssignals Lokalisationssignale 21. Wie durch Pfeil A illustriert, werden die erfassten Lokalisationssignale fortwährend an einen Server 27 übertragen.

Mit dem mobilen Endgerät 22, erfasst ein Kunde die Artikelliste seines Einkaufs durch Scannen 25. Ein wesentlicher Vorteil besteht hierbei darin, dass die Artikelerfassung nicht erst an der Kasse erfolgt, sondern bereits im Vorfeld durch den Kunden. Der Kunde spart hierdurch Zeit.

Wie im Pfeil C illustriert, wird die Artikelliste an die Kasse 24 übertragen. Die Ortungsinformationen werden nicht an die Kasse übergeben, sodass zu keinem Zeitpunkt auf einem System im Geschäft alle Informationen zum Kunden vorliegen. Dies erhöht die Sicherheit für den Kunden.

In dem Moment, in dem die Bezahlung durch die Kasse 24 durch Drücken einer Taste 26 initiiert wird, wird wie im Pfeil B illustriert, die Artikelliste und der Standort der Kasse an den Server 27 übertragen. Optional ist der Standort der Kasse dem Server 27 bereits bekannt.

Die Daten aus dem mobilen Endgerät 22 und der Kasse 24 werden im Server 27 zusammengeführt. Ausgehend vom Zeitpunkt des Abschlusses der Erfassung der Artikelliste prüft der Server 27, ob sich ein mobiles Endgerät 22 zu diesem Zeitpunkt innerhalb eines vorgegebenen Abstands zur Kasse 24 befand. Dies erfolgt durch Vergleich der Positionsdaten aller im Geschäft erfassten mobilen Endgeräte 22 und der Kasse 24. Durch die räumliche (ein mobiles Endgerät 22 befindet sich in der Nähe der Kasse 24) und zeitliche (ein mobiles Endgerät 22 befindet sich in der Nähe der Kasse 24 zum Zeitpunkt des Abschlusses der Erfassung der Artikelliste) Koinzidenz kann die Artikelliste dem Kunden zugeordnet werden.

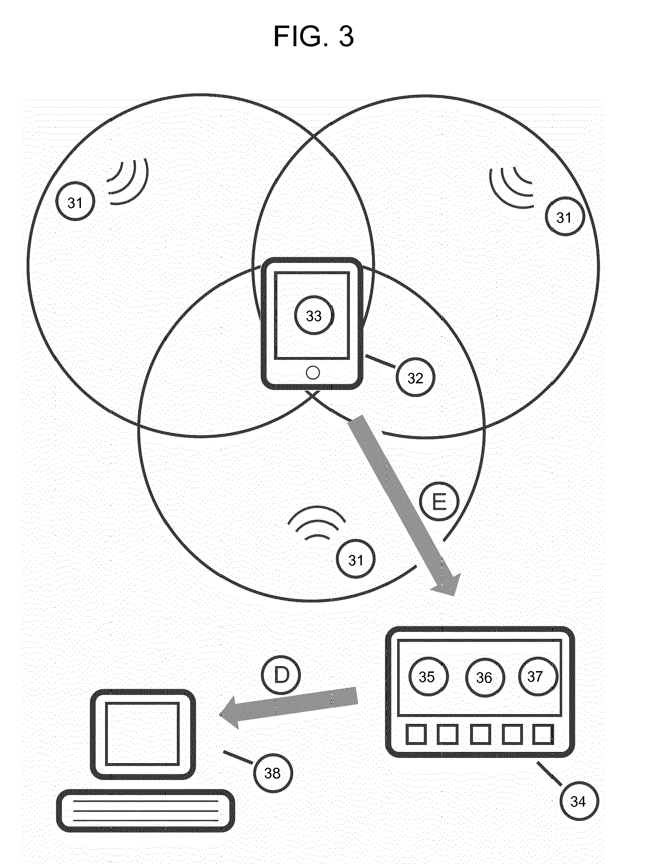

Fig. 3 zeigt eine schematische und exemplarische Darstellung einer dritten Ausführungsform mit der Ermittlung der zeitlichen und räumlichen Koinzidenz an der Kasse.

Ein mobiles Endgerät 32 (beispielsweise ein Smartphone) empfängt durch Mittel 33 zum Erfassen eines Lokalisationssignals Lokalisationssignale 31. Wie durch Pfeil E illustriert, werden die erfassten Lokalisationssignale fortwährend an die Kasse 34 übertragen.

Ein zweites Endgerät 34, in diesem Falle eine Kasse, erfasst die Artikelliste eines Einkaufs durch einen Barcode-Scanner 35. Nach vollständiger Erfassung der Artikelliste wird durch Betätigen einer Taste 36 an der Kasse 34 der Erfassungsvorgang abgeschlossen.

Ausgehend vom Zeitpunkt des Abschlusses der Erfassung der Artikelliste prüft die Kasse 34, ob sich ein mobiles Endgerät 32 zu diesem Zeitpunkt innerhalb eines vorgegebenen Abstands zur Kasse 34 befand. Dies erfolgt durch Vergleich der Positionsdaten aller im Geschäft erfassten mobilen Endgeräte 32 und der Kasse 34. In einer Ausführungsform weist die Kasse 34 hierzu Mittel 37 zum Ermitteln einer räumlichen und zeitlichen Koinzidenz auf. Durch die räumliche (mobiles Endgerät 32 befindet sich in der Nähe der Kasse 34) und zeitliche (mobiles Endgerät 32 befindet sich in der Nähe der Kasse 34 zum Zeitpunkt des Abschlusses der Erfassung der Artikelliste) Koinzidenz kann die Artikelliste dem Kunden zugeordnet werden. Vorteil dieser Ausführungsform ist, dass die Kasse 34 und das mobile Endgerät 32 nicht laufend mit dem Server 38 verbunden sein müssen.

In einer weiteren Ausführungsform erfolgt der Vergleich der Positionsdaten aller im Geschäft erfassten mobilen Endgeräte 32 und der Kasse 34 in Echtzeit.

Wie im Pfeil D illustriert, werden optional Informationen nachgelagert zu Auswertungszwecken oder zur Überprüfung der vorgenommenen Zuordnungen durch die Kasse 34 an den Server 38 übertragen.

Ein Beispiel für eine Anwendung des erfindungsgemäßen Systems, des erfindungsgemäßen Verfahrens, des erfindungsgemäßen Endgeräts und des erfindungsgemäßen Computerprogrammprodukts betrifft insbesondere den Einsatz in Verkaufsstellen zur Erstellung von Kundenprofilen.

Der Fachmann erkennt andere Variationen der offenbarten Ausführungsformen zur Umsetzung der beschriebenen Erfindung aus den beigefügten Zeichnungen, der Beschreibung und den Ansprüchen.

Der Ausdruck "umfassen" in den Ansprüchen schließt nicht aus, dass weitere Merkmale oder Verfahrensschritte vorhanden sind. Der unbestimmte Artikel "ein" oder "eine" schließt nicht aus, dass es sich um eine Mehrzahl handeln kann.

Eine einzelne Einheit kann die Wirkungen mehrerer Elemente in den Ansprüchen übernehmen. Allein die Tatsache, dass bestimmte Merkmale oder Verfahrensschritte in unterschiedlichen abhängigen Ansprüchen definiert werden, bedeutet nicht, dass eine Kombination der genannten Merkmale oder Verfahrensschritte nicht auch eine synergistische Wirkung haben kann.

Ein Computerprogrammprodukt kann gespeichert oder auf einem geeigneten Medium verbreitet werden, wie etwa einem optischen Speichermedium oder einem Festkörpermedium, welches gemeinsam mit oder als Teil von anderer Hardware vertrieben wird. Das Computerprogramm kann aber ebenso in anderer Form vertrieben werden, wie z.B. über das Internet oder andere Telekommunikationssysteme (einschließlich drahtlose Netzwerke).

Die Bezugszeichen in den Ansprüchen dürfen nicht zu einer einschränkenden Auslegung des Patentanspruchs herangezogen werden.

Die Erfindung betrifft das Verknüpfen eines Nutzers eines mobilen Endgeräts mit mindestens einem Datensatz insbesondere in einem Verkaufsmarkt. Ein mobiles Endgerät weist einen Empfänger zum Erfassen eines Ortungssignals auf. Eine Kasse erfasst Einkaufsartikel mit einem Eingabemittel. Ein Mittel schließt das Erfassen ab. Durch Vorliegen einer räumlichen und zeitlichen Koinzidenz lässt sich ermitteln, dass sich das mobile Endgerät zum Zeitpunkt des Abschließens der Erfassung innerhalb eines vorbestimmten räumlichen Abstands zur Kasse befand.

## Patentansprüche

1. System zur Verknüpfung eines Nutzers eines mobilen Endgeräts (12, 22, 32) mit mindestens einem Datensatz, umfassend:
das mobile Endgerät (12, 22, 32), wobei dass mobile Endgerät (12, 22, 32) ein Mittel (13, 23, 33) zum Erfassen eines Lokalisationssignals aufweist;
ein zweites Endgerät (14, 24, 34), wobei das zweite Endgerät (14, 24, 34) ein Mittel (15, 25, 35) zum Erfassen des Datensatzes aufweist;
ein Mittel (16, 26, 36) zum Abschließen des Erfassens; und
ein Mittel (17, 27, 37) zum Ermitteln, auf der Grundlage des Lokalisationssignals, dass sich das mobile Endgerät (12, 22, 32) zum Zeitpunkt des Abschließens der Erfassung innerhalb eines vorbestimmten räumlichen Abstands zum zweiten Endgerät (14, 24, 34) befand.

2. System nach Anspruch 1, wobei das mobile Endgerät (12, 22, 32) einen Zeitstempel des mobilen Endgeräts (12, 22, 32) und/oder einen Zeitstempel des Lokalisationssignals an das Mittel (17, 27, 37) zum Ermitteln überträgt, und/oder wobei das zweite Endgerät (14, 24, 34) einen Zeitstempel des zweiten Endgeräts (14, 24, 34) und/oder einen Zeitstempel des Lokalisationssignals an das Mittel (17, 27, 37) zum Ermitteln überträgt.

3. System nach einem der vorstehenden Ansprüche, wobei das Mittel (17, 27, 37) zum Ermitteln einen oder mehrere Server umfasst, und/oder wobei das mobile Endgerät (12, 22, 32) oder das zweite Endgerät (14, 24, 34) das Mittel (17, 27, 37) zum Ermitteln umfasst.

4. System nach einem der vorstehenden Ansprüche, wobei das zweite Endgerät (14, 24, 34) in einem Geschäft und/oder einem Ausstellungsraum angeordnet ist, und/oder wobei sich das zweite Endgerät (14, 24, 34) im Freien befindet.

5. System nach einem der vorstehenden Ansprüche, wobei das Lokalisationssignal permanent aktiv ist oder in regelmäßigen Abständen gesendet wird, und/oder wobei das Lokalisationssignal mittels einer Funktechnologie durch das mobile Endgerät (12, 22, 32) und/oder durch das zweite Endgerät (14, 24, 34) empfangen wird, wobei die Funktechnologie GPS und/oder WLAN und/oder Bluetooth Low Energy und/oder Beacon-Technologie und/oder NFC und/oder Galileo umfasst.

6. System nach einem der vorstehenden Ansprüche, wobei das Mittel (13, 23, 33) zum Erfassen des Lokalisationssignals eine Anwendung auf dem mobilen Endgerät (12, 22, 32) umfasst, wobei die Anwendung ausgestaltet ist zum Erzeugen eines Lokalisations-Erfassungssignals auf der Grundlage des Lokalisationssignals.

7. System nach Anspruch 6, wobei die Anwendung ausgestaltet ist, beim Erzeugen des Lokalisations-Erfassungssignals zumindest einen von einem aktuellen Zeitstempel des mobilen Endgeräts (14, 24, 34), einem aktuellen Zeitstempel des zweiten Endgeräts (14, 24, 34) und/oder einem aktuellen Zeitstempel des Lokalisationssignals zu verarbeiten.

8. System nach einem der vorstehenden Ansprüche, wobei das Mittel (17, 27, 37) zum Ermitteln ausgestaltet ist, einen aktuellen Zeitstempel des Mittels zum Ermitteln bei einem Empfangen eines Lokalisations-Erfassungssignals zu ergänzen, insbesondere nur dann, wenn das Lokalisations-Erfassungssignal keinen Zeitstempel enthält.

9. System nach einem der Ansprüche 6 bis 7, wobei die Anwendung ausgestaltet ist, dem Mittel (17, 27, 37) zum Ermitteln das Lokalisations-Erfassungssignal bereitzustellen.

10. System nach einem der vorstehenden Ansprüche, wobei das zweite Endgerät (14, 24, 34) ein zweites mobiles Endgerät umfasst, wobei dem Mittel (17, 27, 37) zum Ermitteln eine Position des zweiten mobilen Endgeräts bekannt ist, und/oder wobei das zweite Endgerät (14, 24, 34) ein stationäres Endgerät umfasst, wobei dem Mittel (17, 27, 37) zum Ermitteln eine Position des stationären Endgeräts bekannt ist.

11. System nach einem der vorstehenden Ansprüche, wobei das Mittel (16, 26, 36) zum Abschließen des Erfassens eine Schnittstelle zur Bestätigung der vollständigen Erfassung des Datensatzes umfasst, und/oder wobei das mobile Endgerät (12, 22, 32) oder das zweite Endgerät (14, 24, 34) das Mittel (16, 26, 36) zum Abschließen des Erfassens enthält.

12. Verfahren zur Verknüpfung eines Nutzers eines mobilen Endgeräts (12, 22, 32) mit mindestens einem Datensatz, umfassend die folgenden Schritte:
Erfassen eines Lokalisationssignals durch das mobile Endgerät (12, 22, 32);
Erfassen des Datensatzes durch ein zweites Endgerät (14, 24, 34);
Abschließen des Erfassens;
Ermitteln, auf der Grundlage des Lokalisationssignals, dass sich das mobile Endgerät (12, 22, 32) zum Zeitpunkt des Abschließens der Erfassung innerhalb eines vorbestimmten räumlichen Abstands zum zweiten Endgerät (14, 24, 34) befand.

13. Mobiles Endgerät (12, 22, 32) zur Verknüpfung eines Nutzers des mobilen Endgeräts (12, 22, 32) mit mindestens einem Datensatz, umfassend:
ein Mittel (13, 23, 33) zum Erfassen eines Lokalisationssignals;
ein Mittel zum Empfangen eines Datensatzes von einem zweiten Endgerät (14, 24, 34);
ein Mittel zum Empfangen einer Position des zweiten Endgeräts (14, 24, 34);
ein Mittel zum Senden eines Erfassungsabschluss-Signals an das zweite Endgerät (14, 24, 34); und
ein Mittel (17, 27, 37) zum Ermitteln, auf der Grundlage des Lokalisationssignals, dass sich das mobile Endgerät (12, 22, 32) zum Zeitpunkt des Abschließens der Erfassung innerhalb eines vorbestimmten räumlichen Abstands zum zweiten Endgerät (14, 24, 34) befand.

14. Endgerät (14, 24, 34) zur Verknüpfung eines Nutzers eines ersten mobilen Endgeräts (12, 22, 32) mit mindestens einem Datensatz, umfassend:
ein Mittel (15, 25, 35) zum Erfassen eines Datensatzes;
ein Mittel (16, 26, 36) zum Abschließen des Erfassens;
ein Mittel zum Empfangen eines Lokalisationssignals von dem ersten mobilen Endgerät (12, 22, 32); und
ein Mittel (17, 27, 37) zum Ermitteln, auf der Grundlage des Lokalisationssignals, dass sich das erste mobile Endgerät (12, 22, 32) zum Zeitpunkt des Abschließens der Erfassung innerhalb eines vorbestimmten räumlichen Abstands zum Endgerät (14, 24, 34) befand.

15. Computerprogrammprodukt, welches eingerichtet ist, ein System nach einem der Ansprüche 1 bis 11 zur Durchführung des Verfahrens nach Anspruch 12 zu veranlassen.
